# DEMANDE DE BREVET EUROPEEN

(11) **EP 3 453 292 A1**
(43) Date de publication de la demande: **13.03.2019**
(21) Numéro de dépôt: 18187149.2
(22) Date de dépôt: 02.08.2018
(51) Int. Cl.: A47J 27/21, A47J 41/00

(54) **BOUILLOIRE MUNIE D'AU MOINS DEUX DÉBITS DE VERSAGE**

(30) Priorité: 07.09.2017 FR 1758274
(71) Demandeur: SEB S.A., 69130 Ecully (FR)
(72) Inventeur: RIVA, Arnaud, 21000 DIJON (FR)
(74) Mandataire: Bourrières, Patrice

(57) **Abrégé**

L'invention concerne une bouilloire (1) comprenant un corps (3) agencé au-dessus d'un fond chauffant électrique et un couvercle (10) formant une enceinte destinée à porter de l'eau à ébullition, ladite bouilloire (1) comprenant un conduit de versage (15) de l'eau et un obturateur (20) mobile entre une position de fermeture du conduit de versage (15) et au moins une position d'ouverture du conduit de versage (15).

Conformément à l'invention, une paroi (16), comportant au moins des première (6a, ..., 6f) et deuxième ouvertures traversantes (7a, ...,7r), est agencée transversalement au conduit de versage (15) et en ce que l'obturateur (20) est mobile entre une position de fermeture du conduit de versage (15) dans laquelle l'obturateur (20) ferme les première (6a, ..., 6f) et deuxième ouvertures traversantes (7a, ...,7r), une première position d'ouverture définissant un premier débit de versage dans laquelle l'obturateur (20) libère uniquement la première ouverture traversante (6a, ..., 6f) et une deuxième position d'ouverture définissant un deuxième débit de versage dans laquelle l'obturateur (20) libère les première (6a, ..., 6f) et deuxième ouvertures traversantes (7a, ...,7r).

## Description

La présente invention concerne un appareil de chauffage de liquides, notamment une bouilloire électrique, comportant un fond chauffant électrique, un corps et un couvercle formant une enceinte destinée à porter de l'eau à ébullition, et plus particulièrement une bouilloire dont le débit de versage est ajustable.

On connait par exemple du document FR2756476, une bouilloire comprenant un corps agencé au-dessus d'un fond chauffant électrique et un couvercle formant une enceinte destinée à porter de l'eau à ébullition, la bouilloire comprenant un conduit de versage de l'eau et un obturateur mobile entre une position de fermeture du conduit de versage et au moins une position d'ouverture du conduit de versage. La bouilloire comporte des moyens d'actionnement de l'obturateur qui comportent un bouton poussoir. Un appui plus ou moins important sur le bouton fait passer l'obturateur de la position de fermeture vers la position d'ouverture en passant par plusieurs positions intermédiaires dans lesquelles l'utilisateur peut obtenir plusieurs débits de versage.

Cependant, les positions intermédiaires de l'obturateur ne sont pas des positions stables qui permettent d'avoir un débit de versage calibré et répétitif d'une utilisation à l'autre. Ainsi, l'utilisateur est incité à ouvrir l'obturateur en position d'ouverture maximum et de gérer le débit de versage en inclinant plus ou moins la bouilloire.

De plus, pour verser de l'eau, il faut maintenir une pression constante sur le bouton pour déplacer l'obturateur dans une position d'ouverture.

Un but de la présente invention est de remédier aux inconvénients précités et de proposer une bouilloire qui présente une mise en oeuvre simple et ergonomique et une utilisation sûre.

Un autre but de la présente invention est de proposer une bouilloire qui présente une conception simple et qui soit économique à mettre en oeuvre.

Ces buts sont atteints avec une bouilloire comprenant un corps agencé au-dessus d'un fond chauffant électrique et un couvercle formant une enceinte destinée à porter de l'eau à ébullition, ladite bouilloire comprenant un conduit de versage de l'eau et un dispositif d'obturation mobile entre une position de fermeture du conduit de versage et au moins une position d'ouverture du conduit de versage, caractérisée en ce qu'une paroi, comportant au moins des première et deuxième ouvertures traversantes, est agencée transversalement au conduit de versage et en ce que le dispositif d'obturation est mobile entre une position de fermeture du conduit de versage dans laquelle le dispositif d'obturation ferme les première et deuxième ouvertures traversantes, une première position d'ouverture définissant un premier débit de versage dans laquelle le dispositif d'obturation libère uniquement la première ouverture traversante et une deuxième position d'ouverture définissant un deuxième débit de versage dans laquelle le dispositif d'obturation libère les première et deuxième ouvertures traversantes.

Par une paroi est agencée transversalement au conduit de versage, on comprend que l'eau chaude versée hors de l'enceinte de la bouilloire passe uniquement par les au moins première et/ou deuxième ouvertures traversantes.

Par ouverture traversante, on comprend une ouverture traversante ou un groupe d'ouvertures traversantes.

La première ouverture traversante présente une première section de passage de l'eau chaude qui définit un premier débit de versage lorsque le dispositif d'obturation est dans la première position d'ouverture. La deuxième ouverture traversante présente une deuxième section de passage de l'eau chaude qui, cumulée avec la première section de passage définit un deuxième débit de versage lorsque le dispositif d'obturation est dans la deuxième position d'ouverture. Ainsi, seules les dispersions de fabrication sur les première et deuxième sections qui peuvent être facilement maitrisées lors de la production de la bouilloire influent sur la précision des premier et deuxième débits de versage. En conséquence, les première et deuxième sections sont parfaitement calibrées et définissent des premier et deuxième débits de versage précis et répétitifs dans le temps, notamment quel que soit le niveau de remplissage de la bouilloire.

Le premier débit sera notamment un débit restreint qui permet une grande précision de versage et le deuxième débit sera plutôt un débit important qui permet une grande rapidité de remplissage d'un récipient.

De manière avantageuse, le rapport entre la première section et la somme des première et deuxième section est inférieur à 0,3.

Avantageusement, la paroi est agencée dans le couvercle.

Cette disposition permet de positionner la fonction gestion du débit dans le couvercle, sans compliquer le corps de la bouilloire.

De préférence, la paroi fait partie d'une paroi de fond du couvercle.

Avantageusement, le couvercle comporte un bec verseur.

Ainsi, l'extrémité du conduit de versage qui est formé par le bec verseur est également intégré au couvercle.

De manière avantageuse, le dispositif d'obturation comporte un obturateur.

Ainsi, une seule pièce permet de de fermer ou de libérer les première et deuxième ouvertures traversantes.

De préférence, l'obturateur est mobile en translation selon une direction A.

Une translation est un mouvement facile à mettre en oeuvre dans la bouilloire, ce qui permet de simplifier sa conception.

Avantageusement, l'obturateur comporte un plot s'étendant selon la direction A et présentant une section transversale identique à une section de la deuxième ouverture traversante, le plot étant adapté à coulisser dans la deuxième ouverture traversante entre la position de fermeture ou la première position d'ouverture, dans laquelle le plot est agencé dans la deuxième ouverture traversante, vers la deuxième position d'ouverture, dans laquelle le plot est translaté en dehors de la deuxième ouverture traversante.

Ainsi, dans la position de fermeture ou dans la première position d'ouverture de l'obturateur définissant le premier débit de versage, le plot ferme la deuxième ouverture traversante et pour passer dans la deuxième position définissant le deuxième débit de versage, le plot coulisse pour libérer la deuxième ouverture traversante.

De préférence, l'obturateur comporte un clapet muni d'un joint, le clapet muni du joint fermant les première et deuxième ouvertures lorsque l'obturateur est en position de fermeture.

Cette disposition permet d'obtenir une fermeture étanche de la bouilloire, notamment en cas de renversement.

Avantageusement, la bouilloire comporte un bouton de commande de l'obturateur, le bouton de commande étant mobile en rotation et comportant trois positions stables.

Ainsi, une fois la position de l'obturateur définie par la position du bouton de commande, l'utilisateur n'a pas d'autre action à réaliser que de pencher la bouilloire pour verser l'eau chaude.

De préférence, le bouton de commande comporte une came comprenant deux secteurs de pentes différentes.

Ainsi, la rotation du secteur de la came avec la pente la plus faible agit sur l'obturateur pour le faire passer de sa position de fermeture vers sa première position de versage et la rotation du secteur de came avec la pente la plus importante agit sur l'obturateur pour le faire passer de sa position de fermeture vers sa deuxième position de versage.

Avantageusement, les première et deuxième ouvertures traversantes sont cylindriques.

Une telle construction permet notamment un ajustage facile du plot dans la deuxième ouverture traversante.

L'invention sera mieux comprise à l'étude du mode de réalisation pris à titre nullement limitatif et illustré dans les figures annexées dans lesquelles :
- La figure 1 illustre une vue en perspective d'une bouilloire selon un mode particulier de réalisation de l'invention.
- La figure 2 illustre une vue en perspective éclatée du couvercle et de l'obturateur de la bouilloire illustrée sur la figure 1.
- La figure 3 illustre une vue éclatée partielle du dessus selon la flèche III du boitier inférieur du couvercle illustré sur la figure 2, ainsi que de l'obturateur qui est déplacé latéralement au boitier inférieur.
- La figure 4 illustre une vue en coupe IV-IV du couvercle de la bouilloire illustrée sur la figure 1 et également du couvercle illustré sur la figure 3, l'obturateur étant en position fermée.
- La figure 5 illustre une vue de face du couvercle de la bouilloire illustrée sur la figure 1, l'obturateur étant en première position de versage.
- La figure 6 illustre une vue de face du couvercle de la bouilloire illustrée sur la figure 1, l'obturateur étant en deuxième position de versage.

On notera que, dans ce document, les termes «horizontal», «vertical», «inférieur», «supérieur», «haut», «bas», employés pour décrire la bouilloire, font référence à cette bouilloire en situation d'usage, lorsqu'elle est posée sur un plan de travail horizontal.

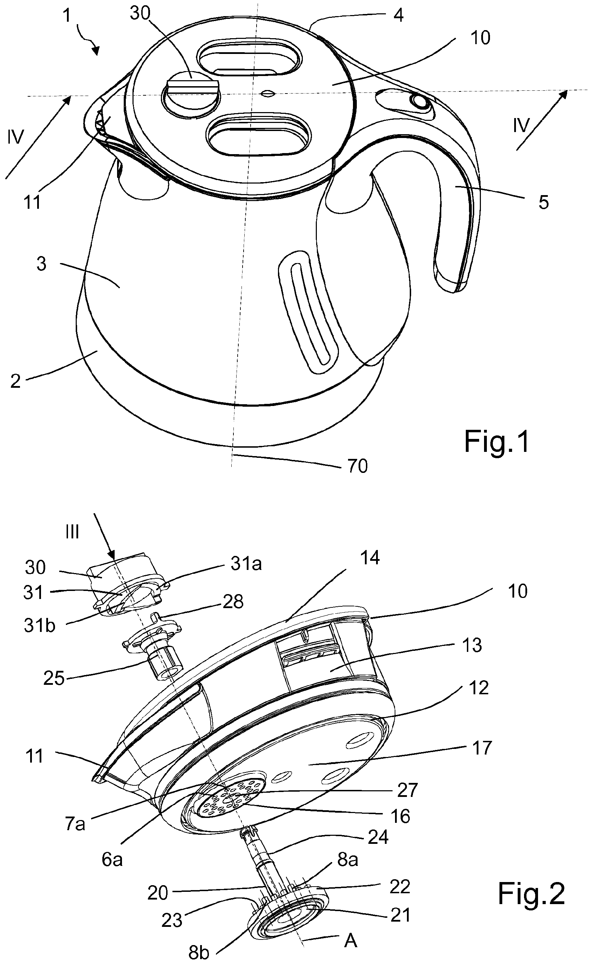

Dans l'exemple de réalisation représenté aux figures 1 à 6, une bouilloire 1 comporte un socle 2 alimenté électriquement par un cordon (non représenté sur les figures) et un corps 3 formant un réceptacle pour l'eau. Le corps 3 comprend une ouverture supérieure 4 de remplissage qui est fermée par un couvercle 10. Le couvercle 10 comprend un bec verseur 11 situé au niveau de l'ouverture supérieure 4. La bouilloire 1 comprend une poignée 5 située à l'opposé du bec verseur 11 par rapport à l'ouverture supérieure. Le corps 3 a une forme sensiblement cylindrique comprenant un axe vertical 70. Le couvercle 10 est amovible par rapport au corps 3 et le couvercle 10 est destiné à être assemblé de manière étanche sur le corps 3 selon un mouvement de translation sensiblement parallèle à l'axe vertical 70 du corps 3.

Le corps 3 comporte un fond chauffant formé d'une coupelle en acier inoxydable sous laquelle sont agencés un diffuseur en aluminium et un élément chauffant (non représentés sur les figures). Le corps 3 muni du fond chauffant et le couvercle 10 forme une enceinte destinée à porter de l'eau à ébullition.

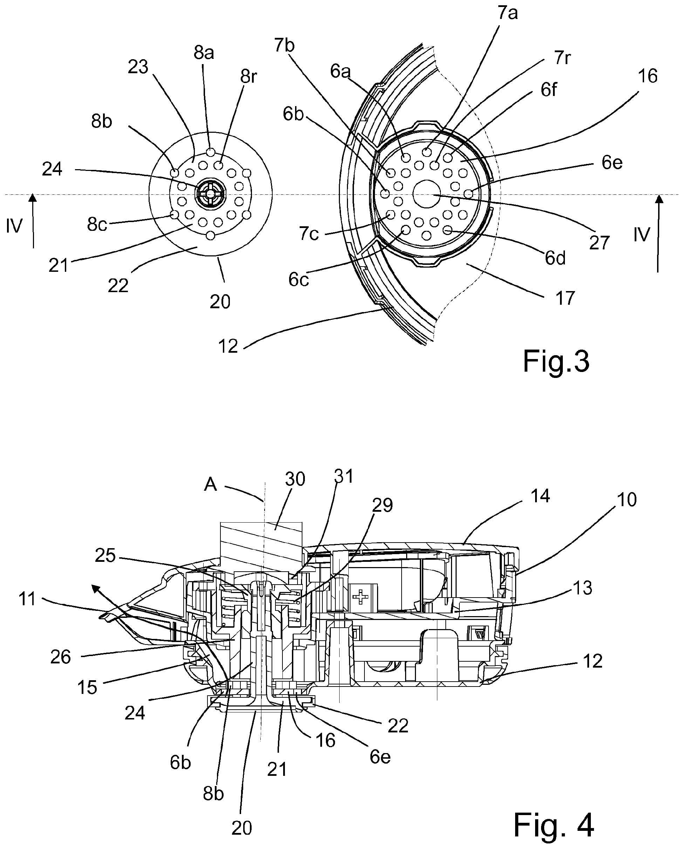

Tel que visible aux figures 2 à 4, le couvercle 10 comporte un boitier inférieur 12, une partie intermédiaire 13 et un boitier supérieur 14. Le couvercle 10 comporte un conduit de versage 15 de l'eau chaude (Fig.4) et le bec verseur 11 forme une extrémité de sortie du conduit de versage 15. Le conduit de versage 15 comporte une paroi 16 munie de 6 premières ouvertures traversantes 6a, 6b, 6c, 6d, 6e, 6f et de 18 deuxièmes ouvertures traversantes 7a, 7b, 7c, ..., 7r à travers lesquelles l'eau chaude peut passer (Fig.3). Les 6 premières ouvertures traversantes 6a, 6b, 6c, 6d, 6e, 6f et les 18 deuxièmes ouvertures traversantes 7a, 7b, 7c, ..., 7r sont identiques et cylindriques. La paroi 16 est sensiblement horizontale et fait partie d'une paroi de fond 17 du boitier inférieur 12. La paroi 16 forme une extrémité d'entrée du conduit de versage 15. Sur la figure 4, une flèche illustre le chemin suivi par l'eau chaude dans le conduit de versage 15.

Le couvercle 10 comporte un dispositif d'obturation comprenant un obturateur 20 mobile en translation le long d'une direction A, parallèle à l'axe vertical 70 et perpendiculaire à un plan horizontal dans lequel s'étend la paroi 16. L'obturateur 20 comporte un clapet 21 agencé sous la paroi 16. Le clapet 21 prend la forme d'un disque et comporte un joint d'étanchéité 22 périphérique destiné à coopérer avec la paroi 16. Le clapet 21 comprend une face supérieure 23 depuis laquelle s'étendent 18 plots 8a, 8b, 8c ..., 8r selon la direction A (Fig.3). Chaque plot 8a, ... ,8r est destiné à coopérer avec une deuxième ouverture traversante 7a, ..., 7r. Chaque plot 8a, ..., 8r est cylindrique et présente une section transversale identique à une section de chacune des deuxièmes ouvertures traversantes 7a, ..., 7r.

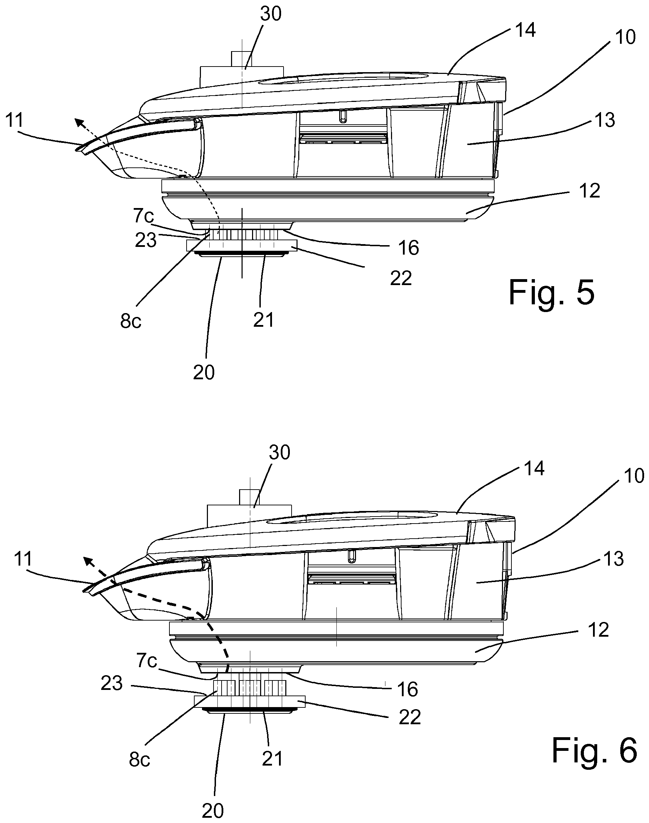

L'obturateur 20 est mobile entre une position de fermeture du conduit de versage 15 dans laquelle le clapet 21 muni du joint d'étanchéité 22 ferme les 6 premières ouvertures traversantes 6a, ..., 6f et les 18 deuxièmes ouvertures traversantes 7a, ..., 7r (Fig.4) et deux positions d'ouverture (Fig.5 et 6).

Une première position d'ouverture (Fig.5) définit un premier débit de versage dans laquelle les 18 plots 8a, ..., 8r ferment les 18 deuxièmes ouvertures traversantes 7a, ..., 7r, l'obturateur 20 libérant uniquement les 6 premières ouvertures traversantes 6a, ..., 6f. Ainsi le premier débit de versage est défini par la somme des sections des 6 ouvertures traversantes 6a, ..., 6f libérées par l'obturateur. Ce groupe de 6 ouvertures traversantes 6a, ..., 6f est équivalent à une première ouverture traversante. Une flèche en pointillés illustre le chemin suivi par l'eau chaude dans le conduit de versage 15.

Une deuxième position d'ouverture (Fig.6) définit un deuxième débit de versage dans laquelle l'obturateur libère les 18 deuxièmes ouvertures traversantes 7a, ..., 7r en plus des 6 premières ouvertures traversantes déjà libérées dans la première position d'ouverture. Le groupe de 18 deuxièmes ouvertures traversantes 7a, ..., 7r est équivalent à une deuxième ouverture traversante. Ainsi le deuxième débit de versage est défini par la somme des sections des 6 premières ouvertures traversantes 6a, ..., 6f et des 18 deuxièmes ouvertures traversantes 7a, ..., 7r libérées par l'obturateur. Le nombre important des 6 premières ouvertures traversantes 6a, ..., 6f et des 18 deuxièmes ouvertures traversantes 7a, ..., 7r permet de limiter la vitesse du flux d'eau chaude dans le conduit de versage 15, aussi bien dans la première position d'ouverture que dans la deuxième position d'ouverture. Une flèche en pointillés illustre le chemin suivi par l'eau chaude dans le conduit de versage 15.

Chaque plot 8a, ..., 8r est adapté à coulisser dans la deuxième ouverture traversante 7a, ..., 7r correspondante entre la position de fermeture ou la première position d'ouverture dans laquelle le plot 8a, ..., 8r est agencé dans la deuxième ouverture traversante 7a, ..., 7r vers la deuxième position d'ouverture dans laquelle le plot 8a, ..., 8r est translaté en dehors de la deuxième ouverture traversante 7a, ..., 7r, vers l'intérieur de l'enceinte de la bouilloire 1.

Conformément aux figures 2 et 4, l'obturateur 20 comporte une tige 24 s'étendant à partir de la face supérieure 23 du clapet 21 selon la direction A. Un actionneur 25 est agencé sur une extrémité libre de la tige 24. Un élément de guidage 26 (Fig.4) agencé dans la partie intermédiaire 13 du couvercle 10, permet de guider l'actionneur 25 en translation selon la direction A, ainsi que la tige 24, le clapet 21 et les plots 8a, ..., 8r. La paroi 16 comporte également une ouverture de guidage 27 en translation de la tige 24, du clapet 21 et des plots 8a, ..., 8r.

Un bouton de commande 30 de l'obturateur 20 est agencé dans le couvercle 10. Le bouton de commande 30 est mobile en rotation et présente trois positions stables : une position centrale, une position droite et une position gauche. Le bouton de commande 30 comporte une came 31 cylindrique (Fig. 2) dont le profil comprend deux secteurs 31a, 31b de pentes différentes. La came 31 coopère avec un poussoir 28 solidaire de l'actionneur 25. Le secteur 31a présentant la pente la plus faible coopère avec le poussoir 28 pour faire passer l'obturateur 20 dans sa première position d'ouverture. Le secteur 31b présentant la pente la plus importante coopère avec le poussoir 28 pour faire passer l'obturateur 20 dans sa deuxième position d'ouverture. Les secteurs 31a, 31b sont agencés tête bêche. Ainsi, la position centrale du bouton de commande 31 correspond à la position de fermeture de l'obturateur 20. Une rotation dans le sens horaire du bouton de commande 30 le fait passer dans sa position droite et fait passer l'obturateur 20 dans sa première position d'ouverture alors qu'une rotation dans le sens anti horaire du bouton de commande 30 le fait passer dans sa position gauche et fait passer l'obturateur 20 dans sa deuxième position d'ouverture. Un ressort 29 de rappel (Fig.4) est agencé entre l'élément de guidage 26 et l'actionneur 25 pour ramener le poussoir 28 en contact avec la came 31.

En fonctionnement, lorsque le bouton de commande 30 est en position centrale, l'obturateur 20 est dans sa position de fermeture du conduit de versage 15 et les 6 premières ouvertures traversantes 6a, ..., 6f et les 18 deuxièmes ouvertures traversantes 7a, ..., 7r sont fermées.

L'utilisateur qui veut verser l'eau chaude avec un débit réduit tourne le bouton de commande 31 vers la position droite pour faire passer l'obturateur 20 dans sa première position d'ouverture. La première position d'ouverture définit un premier débit de versage réduit dans laquelle le clapet 21 en translatant libère les 6 premières ouvertures traversantes 6a, ..., 6f. Les 18 plots 8a, ..., 8r du clapet 21 translatent dans les 18 deuxièmes ouvertures traversantes 7a, ..., 7r et les maintiennent fermées. L'utilisateur peut alors saisir la poignée 5 de la bouilloire 1 et verser de l'eau chaude dans un récipient avec un débit réduit.

L'utilisateur qui veut verser l'eau chaude avec un débit important tourne le bouton de commande 30 vers la position gauche pour faire passer l'obturateur 20 dans sa deuxième position d'ouverture. La deuxième position d'ouverture définit un deuxième débit de versage important dans laquelle les 18 plots 8a, ..., 8r du clapet 21 translatent en dehors des 18 deuxièmes ouvertures traversantes 7a, ..., 7r pour les libérer en plus des 6 premières ouvertures traversantes 6a, ..., 6f déjà libérées dans la première position d'ouverture. L'utilisateur peut alors saisir la poignée 5 de la bouilloire 1 et verser de l'eau chaude dans un récipient avec un débit important.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation non représentée, l'obturateur est mobile en translation selon une direction parallèle à un plan d'extension de la paroi comportant les première et deuxième ouvertures traversantes.

Dans une première variante de réalisation, le dispositif d'obturation comporte un premier obturateur qui permet de fermer ou de libérer la première ouverture traversante et un deuxième obturateur qui permet de fermer ou de libérer la deuxième ouverture traversante.

Dans une deuxième variante de réalisation, la paroi comporte, en plus des première et deuxième ouvertures traversantes, une troisième ouverture traversante. Le dispositif d'obturation mobile présente une troisième position d'ouverture définissant un troisième débit de versage dans laquelle le dispositif d'obturation libère les première, deuxième et troisième ouvertures traversantes. Le dispositif d'obturation peut comporter un obturateur muni d'un second plot qui coopère avec la troisième ouverture traversante, le second plot étant plus long que le plot coopérant avec la deuxième ouverture traversante. Le bouton de commande peut comporter une came comprenant un troisième secteur de pente différente des deux premières.

## Revendications

1. Bouilloire (1) comprenant un corps (3) agencé au-dessus d'un fond chauffant électrique et un couvercle (10) formant une enceinte destinée à porter de l'eau à ébullition, ladite bouilloire (1) comprenant un conduit de versage (15) de l'eau et un dispositif d'obturation (20) mobile entre une position de fermeture du conduit de versage (15) et au moins une position d'ouverture du conduit de versage (15), **caractérisée en ce qu'**une paroi (16), comportant au moins des première (6a, ..., 6f) et deuxième ouvertures traversantes (7a, ...,7r), est agencée transversalement au conduit de versage (15) et **en ce que** le dispositif d'obturation (20) est mobile entre une position de fermeture du conduit de versage (15) dans laquelle le dispositif d'obturation (20) ferme les première (6a, ..., 6f) et deuxième ouvertures traversantes (7a, ...,7r), une première position d'ouverture définissant un premier débit de versage dans laquelle le dispositif d'obturation (20) libère uniquement la première ouverture traversante (6a, ..., 6f) et une deuxième position d'ouverture définissant un deuxième débit de versage dans laquelle le dispositif d'obturation (20) libère les première (6a, ..., 6f) et deuxième ouvertures traversantes (7a, ...,7r).

2. Bouilloire (1) selon la revendication 1, **caractérisée en ce que** la paroi (16) est agencé dans le couvercle (10).

3. Bouilloire (1) selon la revendication 2, **caractérisée en ce que** la paroi (16) fait partie d'une paroi de fond (17) du couvercle (10).

4. Bouilloire (1) selon l'une quelconque des revendications 1 à 3, **caractérisée en ce que** le couvercle (10) comporte un bec verseur (11).

5. Bouilloire (1) selon l'une quelconque des revendications 1 à 4, **caractérisée en ce que** le dispositif d'obturation comporte un obturateur (20).

6. Bouilloire (1) selon la revendication 5, **caractérisée en ce que** l'obturateur (20) est mobile en translation selon une direction A.

7. Bouilloire (1) selon la revendication 6, **caractérisée en ce que** l'obturateur (20) comporte un plot (8a, ..., 8r) s'étendant selon la direction A et présentant une section transversale identique à une section de la deuxième ouverture traversante (7a, ..., 7r), le plot (8a, ..., 8r) étant adapté à coulisser dans la deuxième ouverture traversante (7a, ..., 7r) entre la position de fermeture ou la première position d'ouverture dans laquelle le plot (8a, ..., 8r) est agencé dans la deuxième ouverture traversante (7a, ..., 7r) vers la deuxième position d'ouverture dans laquelle le plot (8a, ..., 8r) est translaté en dehors de la deuxième ouverture traversante (7a, ..., 7r).

8. Bouilloire (1) selon l'une quelconque des revendications 5 à 7, **caractérisée en ce que** l'obturateur (20) comporte un clapet (21) muni d'un joint (22), le clapet (21) muni du joint (22) fermant les premières (6a, ..., 6f) et deuxième ouvertures (7a, ..., 7r) lorsque l'obturateur est en position de fermeture.

9. Bouilloire (1) selon l'une quelconque des revendications 5 à 8, **caractérisée en ce qu'**elle comporte un bouton de commande (30) de l'obturateur (20), le bouton de commande (30) étant mobile en rotation et comportant trois positions stables.

10. Bouilloire (1) selon la revendication 9, **caractérisée en ce que** le bouton de commande (30) comporte une came (31) comprenant deux secteurs (31a, 31b) de pentes différentes.

11. Bouilloire (1) selon l'une quelconque des revendications 1 à 10, **caractérisée en ce que** les première (6a, ...,6f) et deuxième ouvertures traversantes (7a, ...,7r) sont cylindriques.
